Europäisches Patentamt

European Patent Office

Office européen des brevets

(11) Veröffentlichungsnummer : **0 099 527**
**B1**

(12) **EUROPÄISCHE PATENTSCHRIFT**

(45) Veröffentlichungstag der Patentschrift :
07.09.88

(21) Anmeldenummer : 83106704.6

(22) Anmeldetag : 08.07.83

(51) Int. Cl.⁴ : **A 01 D 45/02**, A 01 D 43/08

(54) **Maschine zum Mähen und Häckseln von Mais oder ähnlichem stengelartigen Erntegut.**

(30) Priorität : 17.07.82 DE 3226876
08.03.83 DE 3308077

(43) Veröffentlichungstag der Anmeldung :
01.02.84 Patentblatt 84/05

(45) Bekanntmachung des Hinweises auf die Patenterteilung : 07.09.88 Patentblatt 88/36

(84) Benannte Vertragsstaaten :
AT BE CH DE FR GB IT LI LU NL SE

(56) Entgegenhaltungen :
DE-A- 2 003 964
DE-A- 2 848 450
DE-C-   257 543
FR-A- 1 094 356
GB-A- 2 012 153
GB-A- 2 012 154

(73) Patentinhaber : Maschinenfabrik Kemper GmbH
Am Breul
D-4424 Stadtlohn (DE)

(72) Erfinder : Bertling, Alfred, Dipl.-Ing.
Kalterweg 80
D-4424 Stadtlohn (DE)
Erfinder : Wolters, Norbert
Amselweg 11
D-4423 Gescher (DE)
Erfinder : Steppat, Manfred
Probst-Hugenroth-Strasse
D-4424 Stadtlohn (DE)

(74) Vertreter : Busse & Busse Patentanwälte
Postfach 1226 Grosshandelsring 6
D-4500 Osnabrück (DE)

## Beschreibung

Die Erfindung betrifft eine Maschine zum Mähen und Häckseln von Mais oder ähnlichem stengelartigen Erntegut mit den im Oberbegriff des Patentanspruchs 1 angegebenen Gattungsmerkmalen. Solche Maschinen werden häufig auch kurz als Mais-Mähhäcksler bezeichnet.

Bei einer derartigen bekannten Maschine (DE-A-2 848 450) sind die dem Häckselgebläse mit den Einschubwalzen vorgeordneten und um im wesentlichen vertikale Achsen rotierenden Einzugs- und Mäheinrichtungen jeweils paarweise angeordnet und bilden zwischen sich jeweils eine Einzugs- und Schnittstelle aus, von der die gemähten Stengel des Ernteguts mittels eines nachgeordneten, ebenfalls um eine im wesentlichen senkrechte Achse rotierenden Förderorgans durch einen Stengelkanal dem Häckselgebläse zugeführt werden. Die zusammenwirkenden Paare der Einzugs- und Mäheinrichtungen haben eine dem seitlichen Abstand der Pflanzen- bzw. Stengelreihen des Ernteguts entsprechenden Abstand voneinander, und je nach der Anzahl der innerhalb der von den beiden seitlichen Führungen begrenzten Gesamtarbeitsbreite der Maschine vorgesehenen Paare von Einzugs- und Mäheinrichtungen lassen sich mit dieser bekannten Maschine zwei oder drei parallele Pflanzenreihen ernten.

Diese und andere bisher bekannte Maschinen zum Mähen und Häckseln von Mais od. dgl., gleichgültig, mit welchem Einzugssystem sie arbeiten und ob sie ein- oder mehrreihig ausgeführt sind, müssen stets mehr oder weniger genau längs der Stengelreihe fahren und sind an die von der Aussaat her bestimmten Reihenabstände gebunden. Man hat bereits versucht, bei mehrreihigen Geräten durch Einstellbarkeit der Einzugsorgane auf den Reihenabstand die Fahrgenauigkeit längs der Reihen unempfindlicher zu gestalten oder auch durch Einbau von Lenkautomatiken der Fahrer zu entlasten. Beide Wege sind jedoch baulich aufwendig, ohne daß sich an der Reihengebundenheit der Maschine etwas ändert.

Der Erfindung liegt daher die Aufgabe zugrunde, eine Maschine zum Mähen und Häckseln von Mais oder ähnlichem stengelartigen Erntegut zu schaffen, die unabhängig von Reihenabstand und Reihenrichtung des Ernteguts arbeiten kann, also auch bei Breitsaat einsetzbar ist (vergleichbar einem Mähdrescher im Getreide). Auch soll die Maschine geknicktes Erntegut, z. B. Lagermais, einwandfrei aufnehmen können.

Zur Lösung dieser Aufgabe zeichnet sich die erfindungsgemäße Maschine im wesentlichen aus durch die im kennzeichnenden Teil des Patentanspruchs 1 angegebenen Merkmale. Weitere Merkmale und vorteilhafte Einzelheiten der Erfindung sind in den Ansprüchen 2 bis 14 angegeben.

Als besonders vorteilhaft ist dabei eine Ausbildung der jeweiligen Schneidvorrichtungen der Maschine gemäß dem Kennzeichen des Patentanspruchs 2 anzusehen. Es bedarf dann keiner mechanischen Bearbeitung der Rotationskörper am unteren Umfangsrand mehr, es entfällt die lagermäßige Feinabstimmung zwischen den Rotationskörpern mit den Schneidmessern und den festen Gegenmessern und es wird wegen des Fehlens von ortsfesten Gegenmessern der Wartungsaufwand im Betrieb praktisch gleich Null, weil die nach Art eines Rotormähers mit hoher Geschwindigkeit umlaufenden und die Stengel des Ernteguts frei abschneidenden bzw. abschlagenden Mähmesser eine hohe Standzeit haben.

Weitere Merkmale und Einzelheiten dieser Ausführungsform der Erfindung, insbesondere hinsichtlich der Bildung von verschiedenen, nach Ort und Zeitpunkt definierten Schnittstellen und hinsichtlich des Zusammenhangs von Fahrgeschwindigkeit der Maschine, Umfangsgeschwindigkeit der Rotationskörper und Frequenz der Rotor-Messer, sind in den Ansprüchen 3 bis 6 angegeben.

Wie weiter noch gefunden wurde, ermöglicht diese erfindungsgemäße Ausführungsform der Schneidvorrichtungen auch eine baulich vereinfachte Ausführung der Maschine insgesamt. Es ist nämlich ohne weiteres möglich, den Durchmesser der Rotationskörper so wesentlich zu vergrößern, daß sich eine Ausführung der Maschine mit lediglich zwei den Einschubwalzen des Häckselgebläses vorgeordneten Einzugs- und Mäheinrichtungen ohne Verringerung der Gesamtarbeitsbreite der Maschine erreichen läßt. Auch eine Ausführung mit nur einer großen, die Gesamtarbeitsbreite der Maschine bestimmenden Einzugs- und Mäheinrichtung ist möglich. Die sich auf diese Ausführungsformen der erfindungsgemäßen Maschine beziehenden Merkmale sind in den Ansprüchen 7 bis 14 angegeben. Ein besonderer Vorteil ist dabei die Ermöglichung eines Obenantriebs für den Rotationskörper einerseits und die Mähmesser andererseits, wodurch sich ein insgesamt verringerter Bodenabstand der Maschine ergibt.

Der Gegenstand der Erfindung wird nachstehend anhand einer Zeichnung näher erläutert, in der zwei Ausführungsbeispiele schematisch dargestellt sind ; in der Zeichnung zeigen :

Fig. 1 eine perspektivische Gesamtansicht einer ersten Ausführung einer erfindungsgemäßen Maschine,

Fig. 2 eine Teildraufsicht auf zwei benachbarte Einzugsund Mäheinrichtungen der Maschine nach Fig. 1 in vergrößertem Maßstab,

Fig. 3 eine Ansicht, teilweise geschnitten, nach Linie III-III in Fig. 2,

Fig. 4 eine perspektivische Gesamtansicht einer zweiten, besonders vorteilhaften Ausführung einer erfindungsgemäßen Maschine,

Fig. 5 eine Teildraufsicht auf den in Fahrtrichtung linken Arbeitsbreich der Maschine nach Fig. 4,

Fig. 6 einen vertikalen Teilschnitt etwa nach Linie VI-VI in Fig. 4, mit um 90° in die Schnittebene gedrehter Antriebseinrichtung für Rotationskörper und Schneidvorrichtung,

Fig. 7a-d eine Teildraufsicht auf einen vergrößerten Ausschnitt A gemäß Fig. 5 mit der Darstellung von vier verschiedenen Arbeits-Phasen.

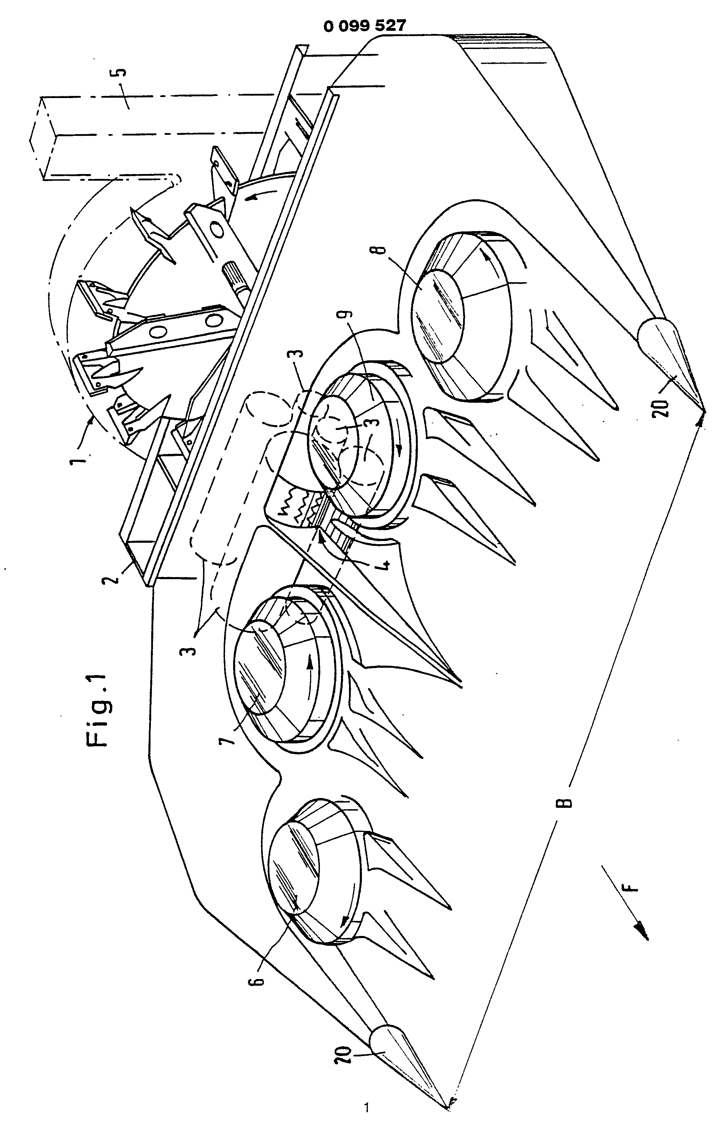

Die gemäß Fig. 1 in Arbeits- bzw. Fahrtrichtung — Pfeil F — vorbewegte Maschine weist ein quer zur Fahrtrichtung stehend angeordnetes Häckselgebläse 1 auf, das mit seinem (nicht dargestellten) Antrieb an einem Tragrahmen 2 gehalten ist. Frontseitig vor dem Häckselgebläse 1 befindet sich eine Mehrzahl von angetriebenen Einschubwalzen 3, die zwischen sich einen mehr oder minder breiten, gegebenenfalls auch veränderlichen horizontalen Einschubspalt 4 ausbilden, durch den das den Einschubwalzen 3 zugeführte Erntegut in das Gehäuse des Häckselgebläses 1 gelangt, wo es zerkleinert und über einen tangentialen Auswurfkanal 5 nach oben ausgeblasen wird.

Zur Beschickung des Häckselgebläses 1 mit den Einschubwalzen 3 sind in Fahrtrichtung F mehrere — im dargestellten Ausführungsbeispiel vier — rotierende Einzugs- und Mäheinrichtungen 6,7 u. 8,9 mit von mehreren über den vorderen Arbeitsbereich verteilten Schnittstellen gebildeten, nebeneinander liegenden Einzel-Arbeitsbreiten vorgeordnet. Dabei sind die den Einschubwalzen 3 näher gelegenen Einzugs- und Mäheinrichtungen 7,9 jeweils zugleich auch Überführungsorgan für von den weiter entfernten Einzugs- und Mäheinrichtungen 6,8 zugeführtes geschnittenes Erntegut.

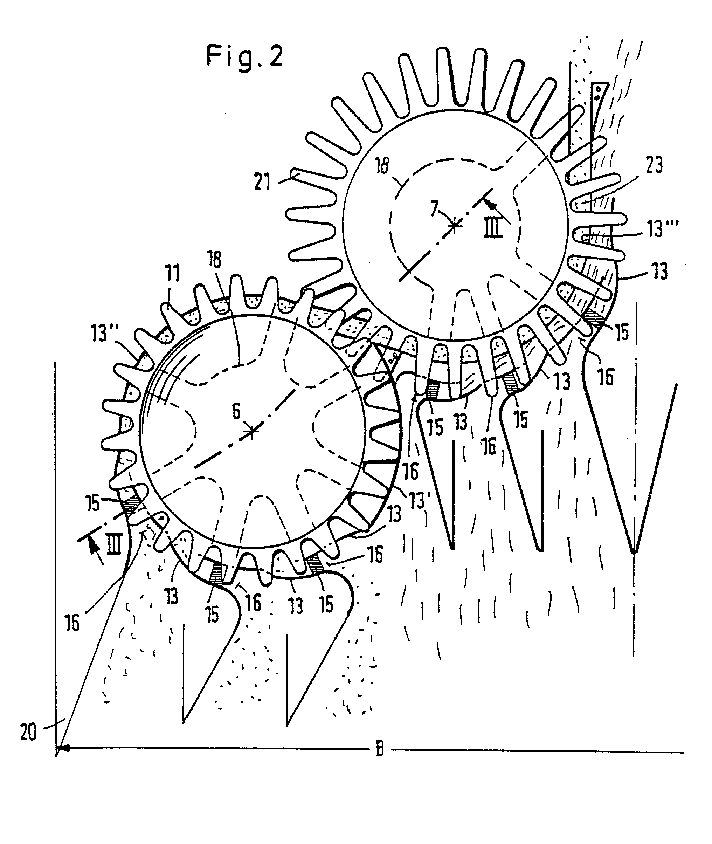

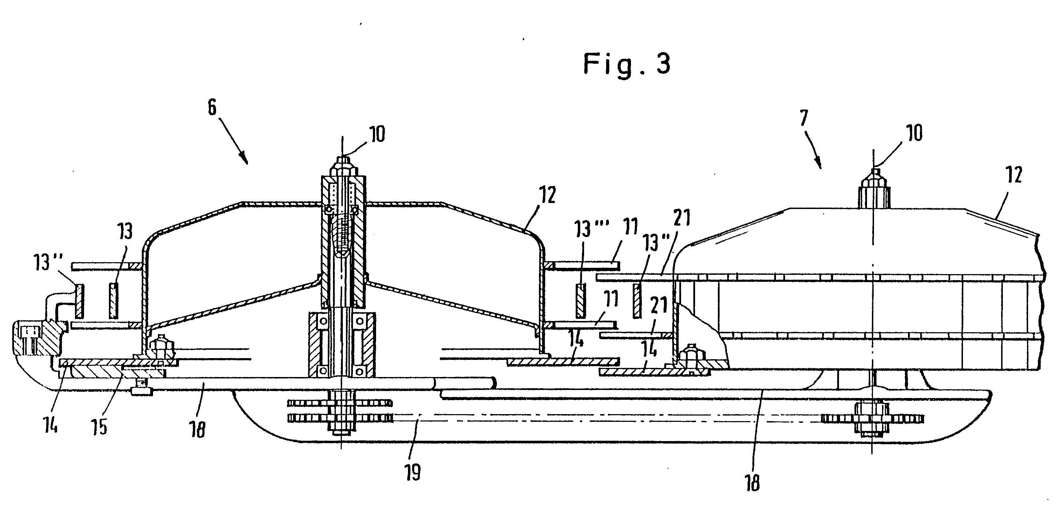

Wie insbesondere aus Fig. 2 und 3 erkennbar, besteht jede der Einzugs- und Mäheinrichtungen 6 bis 9 aus einem um eine vertikale oder zumindest im wesentlichen vertikale Achse 10 umlaufenden und am Umfang mit Mitnehmern 11,21, z. B. in Form von Zahnkränzen, versehenen Rotationskörper 12 mit diesen bereichsweise konzentrisch umgreifenden Führungen 13,13'..., deren Ausbildung und Funktion weiter unten noch erläutert wird. Jeder Rotationskörper 12, zweckmäßig als geschlossener Hohlkörper ausgeführt, trägt unterseitig eine der Anzahl der Mitnehmer 11,21 entsprechende Zahl von über den Umfang nach außen vorstehenden, zweckmäßig auswechselbar angebrachten Schneidmessern 14, die mit mehreren feststehenden, die Schnittstellen definierenden Gegenmessern 15 zusammenwirken. Im gezeichneten Ausführungsbeispiel wirken die vier Einzugs- und Mäheinrichtungen 6 bis 9 an ihrem in Fahrtrichtung vorne liegenden Bereich mit drei jeweils innerhalb eines gesonderten Einzugsspaltes 16 vorgesehenen Gegenmessern 15 zusammen. Auf diese Weise ergibt sich innerhalb der Gesamtarbeitsbreite B der Maschine (z. B. 2,70 m) auch beim Einsatz in Breitsaat ein relativ gleichmäßiges Stoppelbild auf dem Feld. Je mehr Schnittstellen an den Einzugs- und Mäheinrichtungen vorgesehen sind, desto stärker vergleichmäßigt sich das Stoppelbild.

Wie aus Fig. 3 noch ersichtlich, sind die Rotationskörper 12 der Einzugs- und Mäheinrichtungen 6 bis 9 auf unteren Armen oder Platten 18 gelagert und werden auch von unten her, z. B. mittels eines gekapselten Kettentriebs 19, angetrieben. Und zwar werden die einander benachbarten Einzugs- und Mäheinrichtungen 6,7 u. 8,9 jeweils gegenläufig in Richtung der in Fig. 1 eingezeichneten Pfeile angetrieben, wobei die beiden Einschubwalzen 3 zunächst vorgeordneten Einzugs- und Mäheinrichtungen 7,9 das geschnittene Erntegut gleichsinnig von vorn den Einschubwalzen zuführen.

Wird die Maschine, die als Anbaugerät für einen Schlepper od. dgl. oder aber auch als Selbstfahrer ausgebildet sein kann, in Fahrtrichtung F vorbewegt, so wird innerhalb der von zwei äußeren Führungen 20 bestimmten Gesamtarbeitsbreite B das gesamte Erntegut unabhängig von Reihenabstand und Reihenrichtung, also auch in Breitsaat stehendes Erntegut, von den vier Einzugs- und Mäheinrichtungen 6 bis 9 erfaßt, in aufrechter Stellung geschnitten und dann mit den abgeschnittenen Enden den Einschubwalzen 3 zugeführt, bei leichter Schräglage der Stengel nach vorn in Fahrtrichtung F hin. Das von den beiden seitlich äußeren Einzugs- und Mäheinrichtungen 6,8 geschnittene Erntegut wird dabei zunächst den versetzt nachgeordneten und den Einschubwalzen 3 zunächst gelegenen Einzugs- und Mäheinrichtungen 7,9 zugeführt und von diesen dann, zusammen mit dem dort geschnittenen Erntegut, den Einschubwalzen 3 gleichsinnig von vorne her zugeleitet. Zweckmäßig weisen die zugleich auch als Überführungsorgan wirkenden Einzugs- und Mäheinrichtungen 7,9 Mitnehmerkränze 21 auf, zwischen denen eine Führung 13''' einen das übernommene Erntegut vom eigenen Erntegut getrennt haltenden und weiterleitenden Transportkanal 23 ausbildet (Fig. 2). Auf diese Weise gelangt das geschnittene Erntegut von den als Überführungsorgan wirkenden Einzugs- und Mäheinrichtungen 7,9 in Form von zwei jeweils in sich unterteilten Strängen zu den Einschubwalzen 3, wie dies in Fig. 2 gestrichelt bzw. punktiert angedeutet ist.

Die Ausführungsform der Maschine nach Fig. 1 bis 3 läßt sich ohne weiteres dahin modifizieren, daß statt der dargestellten vier Einzugs- und Mäheinrichtungen 6 bis 9 auch sechs solcher Einrichtungen vorgesehen sein können, beispielsweise auch mit unterschiedlichen Durchmessern, wobei dann die den Einschubwalzen zunächst vorgeordneten Einzugs- und Mäheinrichtungen mit einem entsprechend großen Aufnahmevolumen für das Überführungsgut auszustatten wären. Auch eine Verringerung der Zahl der Einzugs- und Mäheinrichtungen auf z. B. zwei ist möglich. Die Arbeitsbreite B der Maschine wäre dann — bei unverändertem Durchmesser der Rotationskörper — entsprechend geringer, der Vorteil des unabhängig von Reihenabstand und Reihenrichtung möglichen Arbeitens der Maschine bliebe aber auch in diesem Fall erhalten. Auch in bezug auf die konstruktive Ausbildung der die Einzugs- und Mäheinrichtungen bildenden Rotationskörper mit den Mitnehmern und den Führungen sind unterschiedliche Gestaltungen möglich.

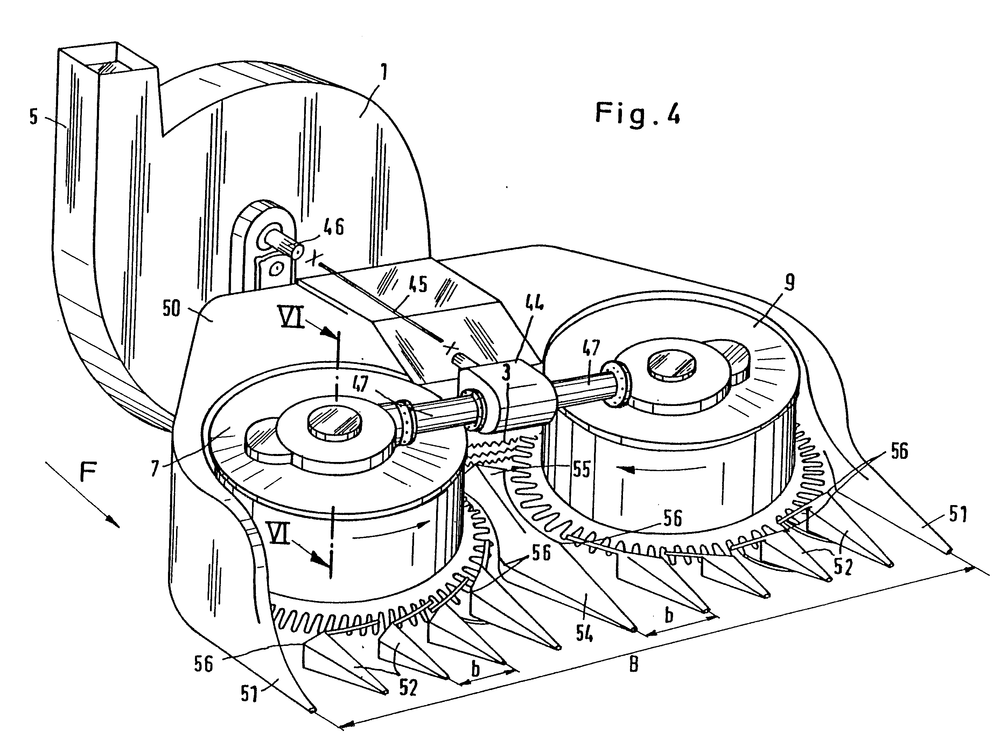

Eine zweite, besonders vorteilhafte Ausführungsform der Maschine ist in Fig. 4 bis 7 dargestellt. Wie zunächst aus Fig. 4 ersichtlich, weist die in Arbeits- bzw. Fahrtrichtung — Pfeil F — vorbewegte Maschine in Übereinstimmung mit der Ausführung nach Fig. 1 bis 3 ein quer zur Fahrtrichtung stehend angeordnetes Häckselgebläse 1 auf, das mit seinem Antrieb an einem Tragrahmen (nicht dargestellt) gehalten ist. Frontseitig vor dem Häckselgebläse 1 befindet sich eine Mehrzahl von angetriebenen Einschubwalzen 3, die zwischen sich einen mehr oder minder breiten, gegebenenfalls auch veränderlichen horizontalen Einschubspalt ausbilden, durch den das den Einschubwalzen 3 zugeführte Erntegut in das Gehäuse des Häckselgebläses 1 gelangt, wo es zerkleinert und über einen tangentialen Auswurfkanal 5 nach oben ausgeblasen wird.

Zur Beschickung der Einschubwalzen 3 des Häckselgebläses 1 sind in Fahrtrichtung F mehrere — im dargestellten, bevorzugten Ausführungsbeispiel nur zwei — rotierende Einzugs- und Mäheinrichtungen 7,9 mit von mehreren über den vorderen Arbeitsbereich verteilten Schnittstellen gebildeten, nebeneinander liegenden Arbeitsbreiten vorgeordnet.

Wie insbesondere aus Fig. 4 u. 6 erkennbar, besteht jede der beiden Einzugs- und Mäheinrichtungen 7,9 — ebenso wie bei der Maschine nach Fig. 1 bis 3 — aus einem um eine vertikale oder zumindest im wesentlichen vertikale Achse 10 umlaufenden und am Umfang mit Mitnehmern bzw. Mitnehmer-Kränzen versehenen Rotationskörper 12. Jedem Rotationskörper 12, zweckmäßig als Hohlzylinder mit oberer Abdeckung 12' ausgeführt, ist unterseitig eine Schneidvorrichtung zugeordnet.

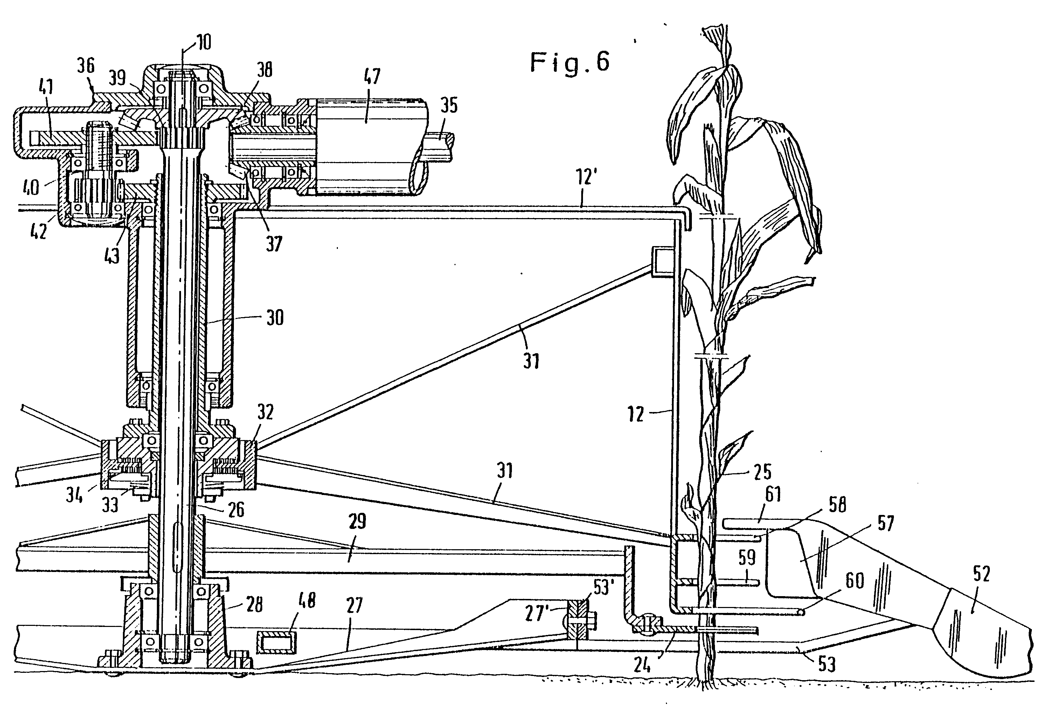

Im Unterschied zur Ausführung nach Fig. 1 bis 3 umfaßt die Schneidvorrichtung unabhängig vom zugehörigen Rotationskörper 12 umlaufende, jedoch mit wesentlich höherer Umfangsgeschwindigkeit als dieser angetriebene Mähmesser 24, welche die Gutstengel 25 nach Art eines Rotormähers im freien Schnitt, also ohne feststehendes Gegenmesser, abtrennen. Wie im einzelnen aus Fig. 6 erkennbar, ist zum Antrieb der Mähmesser 24 eine sich durch den Rotationskörper 12 erstreckende Antriebswelle 26 vorgesehen, deren Mittelachse die vertikale oder im wesentlichen vertikale Drehachse 10 des Rotationskörper 12 definiert bzw. mit dieser zusammenfällt. Die Antriebswelle 26 ist mit ihrem unteren Ende in einer an einem Gleitstück 27, z. B. in Form einer Gleitkufe, vorgesehenen Nabe 28 gelagert und abgestützt. Ein auf der Antriebswelle 26 festgesetzter Rotor 29, der zweckmäßig innerhalb des Mantels des Rotationskörpers 12 gelegen ist, trägt am Umfang die Mähmesser 24, die den Mantel des Rotationskörpers untergreifen und über diesen nach außen hin vorstehen.

Oberhalb des Mährotors 29 ist auf der Antriebswelle 26 und koaxial zu dieser eine Hohlwelle 30 gelagert, von der aus der Rotationskörper 12 angetrieben wird. Dazu kann der Rotationskörper 12 im Innern mit am Mantel befestigten Stützstreben 31 versehen sein, die anderenends an einem Nabenring 32 festgelegt sind. Der Nabenring 32 ist mit dem unteren Ende der Hohlwelle antriebsmäßig gekuppelt entweder starr oder, wie in Fig. 3 dargestellt, mit einer durch Federn 33 gespannten Reibkupplung 34. Hierdurch wird für den Rotationskörper 12 ein Überlastschutz erreicht.

Wie weiter aus Fig. 6 ersichtlich, erfolgt der Antrieb der Antriebswelle 26 für den Mährotor 24,29 und der Hohlwelle 30 für den Rotationskorper 12 von oben her mittels einer gemeinsamen Antriebseingangswelle 35, die — wie aus Fig. 4 ersichtlich — oberhalb des Rotationskörpers 12 horizontal liegend und quer zur Fahrtrichtung angeordnet ist, in Fig. 6 jedoch um 90° in die Zeichenebene gedreht dargestellt wurde. Die Antriebseingangswelle 35 führt in einen Getriebeblock 36, in dem die Antriebswelle 26 und die Hohlwelle 30 an ihrem oberen Ende gelagert und so miteinander gekoppelt sind, daß die von der Antriebseingangswelle 35 gelieferte Drehzahl in zwei unterschiedliche Drehzahlen zerlegt wird.

Dies kann z. B. in der Weise geschehen, daß die Antriebseingangswelle 35 an ihrem in den Getriebeblock 36 geführten Ende ein Kegelritzel 37 tragt, das mit einem auf der Antriebswelle 26 für den Mährotor 24,29 festgesetzten Kegelrad 38 mit einer Untersetzung von z. B. 1 : 2 kämmt, womit sich die Drehzahl für den Mährotor mit halber Eingangswellendrehzahl ergibt. Ein auf der Antriebswelle 26 unterhalb des Kegelrades 38 ausgebildetes oder aufgesetztes Ritzel 39 kämmt mit einem auf einer Zwischenwelle 40 im Getriebeblock 36 sitzenden Zahnrad 41 mit einer Untersetzung von z. B. 1 : 5, woraus sich die Drehzahl der Zwischenwelle ergibt, die über ein Ritzel 42 mit weiterer Untersetzung von z. B. 1 : 4 auf ein auf der Hohlwelle 30 festgesetztes Zahnrad 43 übertragen wird, womit sich die Drehzahl des Rotationskörpers 12 ergibt. Bei einer für die Antriebseingangswelle 35 angenommenen Drehzahl von 1 000 U/min ergibt sich auf diese Weise bei den als Beispiel angegebenen Untersetzungen eine Drehzahl von 500 U/min für die Antriebswelle 26 des Mährotors 24,29 und von 25 U/min für die hohle Antriebswelle 30 des Rotationskörpers 12, d. h. ein Verhältnis der Antriebsdrehzahlen von 1 : 20.

Wie aus Fig. 4 ersichtlich, sind die Antriebseingangswellen für die beiden Einzugs- und Mäheinrichtungen 7,9 mittig durch ein gemeinsames Winkelgetriebe 44 miteinander gekoppelt, das seinerseits über eine Gelenkwelle 45 od. dgl. von einer hochgesetzten Welle 46 des Häckselgebläses 1 angetrieben wird, vorzugsweise mit gleicher Drehzahl wie dieses, also z. B. ebenfalls 1 000 U/min. Zweckmäßig sind dabei die jeweils mit einem Rohr 47 gekapselten Antriebseingangswellen 35 mit dem gemeinsamen Winkelgetriebe 44 derart oberhalb und vor den Einschubwalzen 3 des Häckselgebläses 1 angeordnet, daß sie ein die Schräglage der Gutstengel für das Einbringen in die Einschubwalzen begünstigendes Widerlager bzw. Führungsteil ausbilden. Gleichzeitig bilden die die Antriebseingangswellen 35 kapselnden, sowohl am gemeinsamen Winkelgetriebe 44 wie auch jeweils am Getriebeblock 36 befestigten Rohre 47 eine obere Stützbrücke für die beiden Einzugs- und Mäheinrichtungen 7,9 aus, die unterseitig ergänzt wird durch einen die beiden Gleitstücke 27, z. B. Gleitkufen, gegeneinander abstützenden Querverbinder 48 (Fig. 6).

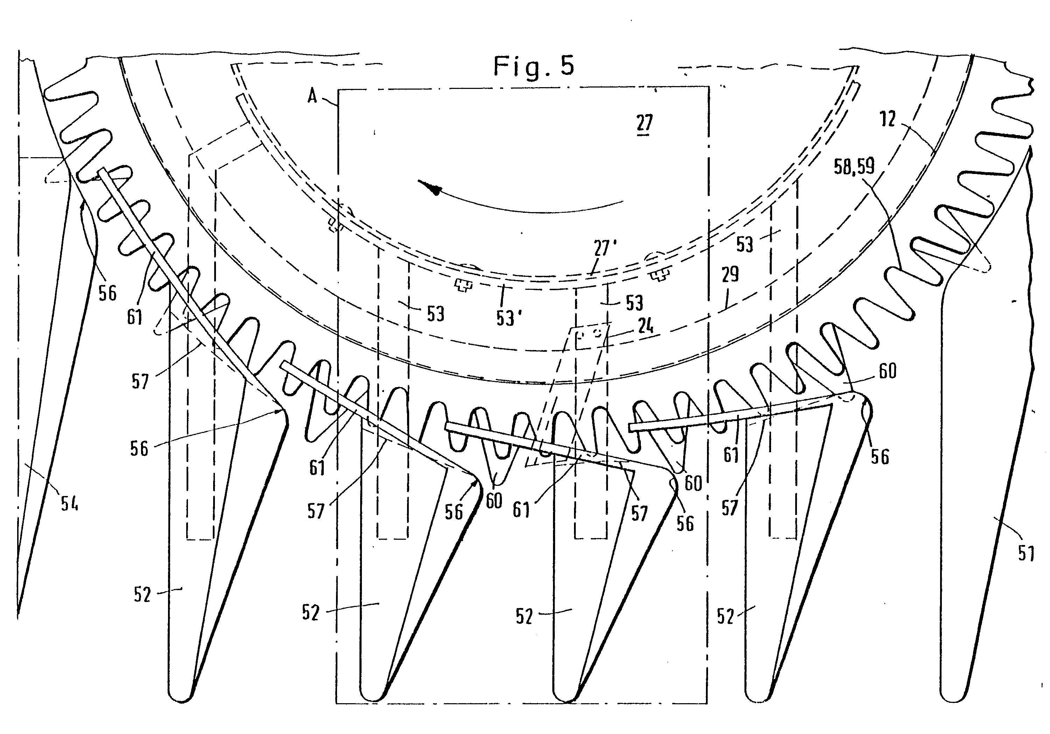

Wie weiter aus Fig. 4 u. 6 ersichtlich, sind die beiden Einzugs- und Mäheinrichtungen 7,9 an ihrer Rückseite, d. h. an ihrer der Fahrtrichtung F entgegengesetzten Seite, von einem auch die Einschubwalzen 3 des Häckselgebläses 1 umkleidenden Gehäusemantel 50 umgeben, der die beiden Einzugsund Mäheinrichtungen 7,9 mit hierzu konzentrischer Krümmung auch seitlich umgreift und in nach vorn, d. h. in Fahrtrichtung F der Maschine, gerichteten Teilerspitzen 51 ausläuft. Der Abstand dieser beiden Teilerspitzen 51 voneinander ergibt die Gesamtarbeitsbreite B der Maschine. Innerhalb dieser Gesamtarbeitsbreite sind jeder Einzugs- und Mäheinrichtung 7, 9 weitere Teilerspitzen 52 zugeordnet, die unterseitig jeweils an einer am Gleitstück 27 zweckmäßig lösbar festgelegten, den Rotationskörper 12 und die Mähmesser 24 untergreifenden Tragstange 53 festgelegt sind. Das Gleitstück 27 kann dabei einen Halbring 27' aufweisen, an dem die Tragstangen 53 mit einem sie verbindenen, gemeinsamen Ringabschnitt 53' angeflanscht sind (Fig. 5 u. 6). Weiterhin ist zwischen den beiden Einzugs- und Mäheinrichtungen 7, 9 eine mittlere Teilerspitze 54 vorgesehen, deren rückwärtiger Bereich zweckmäßig als bodenseitige Führungsfläche 55 für das sich bildende Paket der abgeschnittenen Gutstengel beim Einschub in die Einschubwalze 3 des Häckselgebläses 1 ausgebildet sein kann.

Sämtliche Teilerspitzen 51, 52, 54 sind — ebenso wie bei der Ausführung nach Fig. 1 bis 3 — parallel zueinander in Fahrtrichtung F der Maschine ausgerichtet und mit jeweils gleichem Abstand b nebeneinander angeordnet. Die Abstände b zwischen den Teilerspitzen summieren sich zur Gesamtarbeitsbreite B der Maschine. Bei der Ausführung nach Fig. 4 mit insgesamt elf Teilerspitzen und zehn Abständen bzw. Einzel-Arbeitsbreiten b ergibt sich somit beispielsweise für b = 0,24 m eine Gesamtarbeitsbreite B = 2,40 m.

Ebenso wie bei der Maschine nach Fig. 1 bis 3 bildet auch hier — abgesehen von den beiden seitlichen Teilerspitzen 51 — jede der Teilerspitzen 52 eine definierte Einzugs- und Schnittstelle 56 für die Gutstengel aus, die mittlere Teilerspitze 54 deren zwei, eine für die Einzugs- und Mäheinrichtung 7, die andere für die Einzugs- und Mäheinrichtung 9. Dabei verläuft die eine Fläche der Teilerspitzen 52 parallel zur Fahrtrichtung F der Maschine, während die andere, gegen die Drehrichtung der Rotationskörper weisende Fläche — wie auch die beiden Flächen der mittleren Teilerspitzen 54 — mit der Fahrtrichtung einen solchen Winkel einschließt, daß sich die Einzugsund Schnittstelle 56 jeweils etwa bei b/2 befindet. Und ebenso wie für die Maschine nach Fig. 1 bis 3 gilt auch hier : Je mehr Einzugs- und Schnittstellen (= Einzel-Arbeitsbreiten b) an den Einzugs- und Mäheinrichtungen vorgesehen sind, desto stärker vergleichmäßigt sich das Stoppelbild, insbesondere beim Einsatz in Breitsaat. Während nun aber bei der Maschine nach Fig. 1 bis 3 die einzelnen Schnittstellen durch ortsfeste Gegenmesser eindeutig definiert sind, bedarf es bei der Ausführungsform der Maschine nach Fig. 4 bis 7, bei der die Gutstengel vom Mährotor 24, 29 im freien Schnitt abgetrennt werden, besonderer Maßnahmen und einer Abstimmung verschiedener Faktoren, um auch hier die gewünschten, zeitlich und örtlich definierten Einzugs- und Schnittstellen 56 zu erreichen :

Wie aus Fig. 5 u. 6 ersichtlich, bilden die Teilerspitzen 52, 54 an ihrer den Einzugs- und Mäheinrichtungen 7, 9 zugekehrten Rückseite vertikale Stütz- und Führungsflächen 57 aus, die in Drehrichtung der Rotationskörper 12 eine zunächst geradlinige bzw. plane Erstreckung haben, und zwar mit leichter Schrägstellung gegen den Umfang des zugehörigen Rotationskörpers. Wenn, wie dargestellt, am unteren Rand jedes Rotationskörpers 12 zwei Mitnehmer-Zahnkränze 58, 59 mit gleicher, im Zahngrund etwa dem Durchmesser eines Gutstengels entsprechender enger Teilung im Abstand übereinander vorgesehen sind und sich in einer darunter gelegenen Ebene ein weiterer Kranz mit einer geringeren Zahl (z. B. 24) von längeren, über den Umfang der Mitnehmer-Zahnkränze 58, 59 nach außen vorstehenden Greifzähnen 60 befindet (Fig. 6), so bilden die Stütz- und Führungsflächen 57 einen sich vom Umfangskreis der Greifzähne 60 bis zum Umfangskreis der beiden Mitnehmer-Zahnkränze 58, 59 erstreckenden Einzugsspalt aus, und zwar unter Überdeckung des vertikalen Abstandes der beiden Mitnehmer-Zahnkränze 58, 59, derart, daß deren Mitnehmerzähne an dem, in Drehrichtung gesehen, hinteren Bereich der Stütz- und Führungsflächen 57 mit nur geringem Abstand vorbeistreichen, während die Greifzähne 60 unterhalb der die Rückseiten der Teilerspitzen 52, 54 bildenden Stütz- und Führungsflächen 57 passieren. Am oberen Rand jeder Stütz- und Führungsfläche oder etwas oberhalb derselben sind Führungsfinger 61 vorgesehen, die sich aus einer mit der Stütz- und Führungsfläche 57 zunächst bündigen und parallelen Längserstreckung im weiteren Verlauf oberhalb des obersten Mitnehmer-Zahnkranzes 58 in dessen Umfangskreis hineinerstrecken, und zwar bis in einen hinter der rückseitigen Stütz- und Führungsfläche der in Drehrichtung benachbarten Teilerspitze gelegenen Bereich (Fig. 5). Diese Führungsfinger 61 sorgen dafür, daß geschnittene-Gutstengel jeweils in den Zahngrund der Mitnehmer-Zahnränze 58, 59 eingedrückt, dort gehalten und von diesen mitgenonmen werden und so nachfolgende Einzugs- und Schnittstellen 56 getrennt von hinzukommenden Gutstengeln passieren.

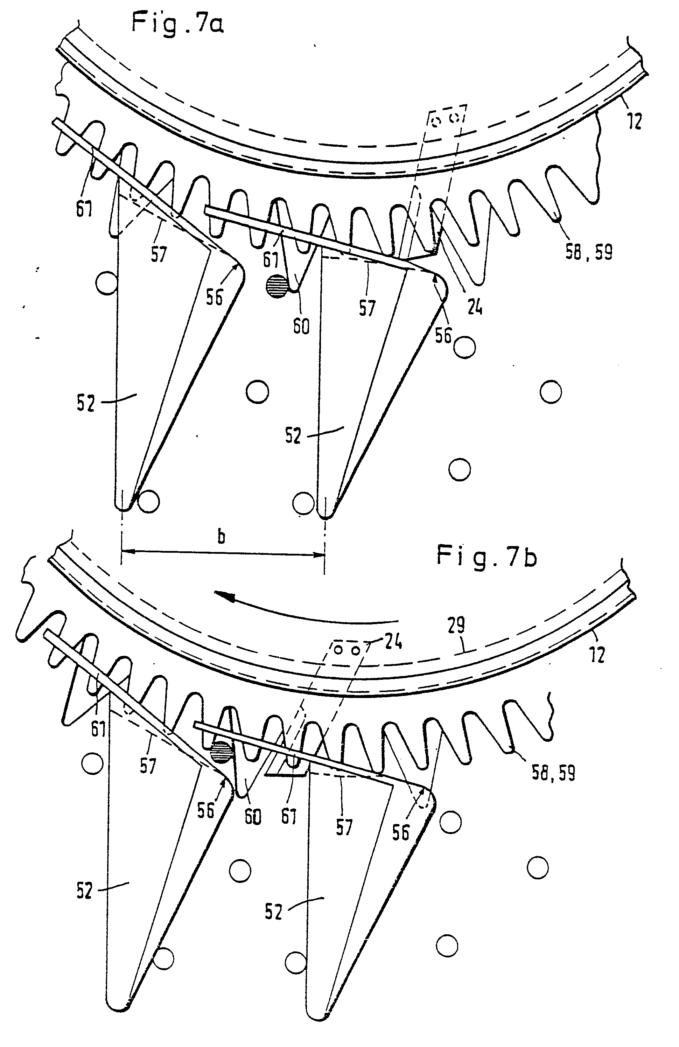

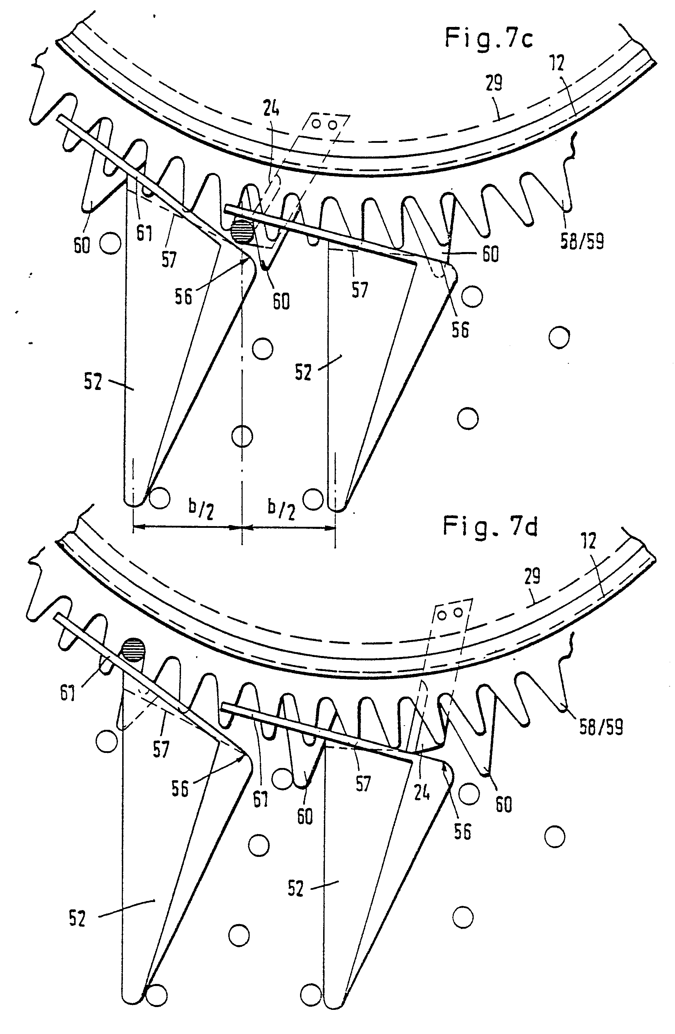

In Fig 7 a bis d sind vier verschiedene Arbeitsphasen, die sich beim Einsatz der Maschine ergeben, in zeitlicher Folge für eine Arbeitsbreite b veranschaulicht Die Fig. 7a zeigt, wie ein beim Vorbewegen der Maschine in Fahrtrichtung F zwischen zwei Teilerspitzen 52-gelangter Gutstengel in den Umfangskreis der Greifzähne 60 gelangt ist, von einem dieser. Greifzähne ergriffen und unter dem Einfluß der weiteren Vorbewegung der Maschine sowie der Drehbewegung des Rotationskörpers mit den Greifzähnen in Richtung gegen die Stütz- und Führungsfläche 57 der benachbarten Teilerspitze eingezogen wird. Die Fig. 7 b zeigt den Gutstengel in seiner eingezogenen Stellung, in der er sich unmittelbar hinter der, bezogen auf die Drehrichtung, vorderen Ecke an der Rückseite der Teilerspitze befindet und dort zwischen deren Stütz- und Führungsfläche 57, dem Führungsfinger 61 sowie zwischen dem Greifzähn 60

5

und den Rücken benachbarter Zähne der beiden übereinander liegenden Mitnehmer-Zahnkränze 58, 59 schnittbereit gehalten wird. Die Fig. 7c zeigt den in diesem Zeitpunkt und an dieser Stelle erfolgenden Schnitt durch eines der Messer 24 des Rotors 29. Die Fig. 7d zeigt den abgeschnittenen Gutstengel bei Weitertransport in Drehrichtung in Richtung auf die Einschubwalzen 3 des Häckselgebläses 1 ; es ist erkennbar, daß der abgeschnittene Gutstengel durch den Fhürungsfinger 61 der Teilerspitze in den Zahngrund der beiden oberen Mitnehmer-Zahnkränze 58, 59 eingedrückt worden ist und so die nächste oder die nächsten Schnittstellen jeweils getrennt von hinzukommenden Gutstengeln passieren kann, bis er dicht vor den Einschubwakzen 3 des Häckselgebläses 1 aus den Mitnehmer-Zahnkränzen 58, 59 freikommt, gegebenenfalls unter Mitwirkung von zwischen diese eingreifenden Abstreifern und mit dem abgeschnittenen Ende voran entgegen der Fahrtrichtung F der Maschine zwischen die Einschubwalzen 3 gelangt. Aus Fig. 7d ist auch erkennbar, daß bereits ein nächster Gutstengel von einem weiteren Greifzahn 60 erfaßt und von diesem zur Teilerspitze hin eingezogen wird, d. h. die Phase 1 sich wiederholt.

Die Darstellung der vier verschiedenen Phasen gemäß Fig. 7a bis 7d ist allerdings nur als idealisiert und schematisch zu verstehen. Bei sehr dichter Stengelfolge im Bereich zwischen zwei Teilerspitzen, also bei besonders geringem Stengelabstand und/oder hoher Fahrgeschwindigkeit, kann es ohne weiteres vorkommen, daß die Stengel nicht nur von den langen Greifzähnen 60 erfaßt und eingezogen werden, sondern auch im Zwischenraum zwischen zwei Greifzähnen 60 unmittelbar in die Zähne der Mitnehmer-Zahnkränze 58, 59 gelangen und von diesen hinter die nächste Teilerspitze zur Einzugsund Schnittstelle 56 hin eingezogen werden. Sie werden dort dann ebenfalls entsprechend der Darstellung in Fig. 7c abgetrennt und dann von den Mitnehmer-Zahnkränzen weiterbefördert. Das bedeutet, daß die Maschine auch bei sehr dicht stehendem stengelartigen Erntegut, so z. B. bei Raps, eingesetzt werden kann. Beim Ernten von Mais, dessen Stengel in jedem Fall einen bestimmten Mindestabstand voneinander haben müssen, auch im Falle von Breitsaat, wird allerdings unter normalen Verhältnissen, also bei stehendem Gut und nicht zu hoher Pahrgeschwindigkeit, annähernd ein Ablauf nach Fig. 7a bis d erreicht werden, d. h. die Gutstengel werden überwiegend jeweils von den Greifzähnen 60 eifaßt und eingezogen.

Gleichgültig, ob die Gutstengel von den Greifzähnen 60 und/oder den Zähnen dei Mitnehmer-Zahnkränze 58, 59 eingezogen werden, in jedem Fall ist durch die Bemessung der Anzahl und Umfangsgeschwindigkeit der Mähmesser 24 in Abhängigkeit von der Umfangsgeschwindigkeit der Rotationskörper 12 sichergestellt, daß sich eine die eingezogenen Gutstengel jeweils an der gleichen Einzugs- und Schnittstelle 56 (sh. Fig. 7b u. c) abtrennende Schnittfrequenz ergibt. Die insoweit bestehenden Zusammenhänge zwischen der Drehzahl bzw. Umfangsgeschwindigkeit der Rotationskörper, der Fahrgeschwindigkeit der Maschine und der Drehzahl bzw. Umfangsgeschwindigkeit der Mährotoren und damit der Schnittfolge bzw. Schnittfrequenz seien nachstehend anhand eines Zahlenbeispiels näher veranschaulicht :

Ausgehend von der Vorgabe, daß die Umfangsgeschwindigkeit der Rotationskörper 12 etwa der Einlaufgeschwindigkeit der Gutstengel 25 in das Häckselgebläse 1 entsprechen sollte, um keinen Gutstau vor den Einschubwalzen entstehen zu lassen, sei angenommen, daß die Umfangsgeschwindigkeit der Einschubwalzen 2 m/s betrage und demgemäß auch die Zuführ- bzw. Einlaufgeschwindigkeit der abgeschnittenen Gutstengel etwa diesen Wert erreichen soll. Es sei weiter angenommen, daß bei der in der Zeichnung veranschaulichten Maschine die beiden Rotationskörper 12 im Bereich der Greifzähne 60 einen Durchmesser von 1,5 m haben. Aus der geltenden Beziehung

$$\text{Rotationskörper-Drehzahl} = \frac{\text{Rotationskörper-Umfangsgeschwingkeit}}{\text{Rotationskörperumfang}}$$

$$= \frac{2 \text{ m/s}}{1,5 \text{ m} \cdot \pi}$$

ergibt sich für jeden Rotationskörper eine Drehzahl von 0,4 U/s (= 24 U/min).

Es sei weiter angenommen, daß der Mährotor 24, 29 einen etwas kleineren Durchmesser von 1,4 m habe und dessen Drehzahl — wie oben bereits im Zahlenbeispiel angegeben wurde — im Verhältnis von 20 :1 zur Drehzahl des Rotationskörpers 12 liegt.

Daraus ergibt sich für den Mahrotor 24, 29 eine Drehzahl von 8 U/s (= 480 U/min) und damit eine

$$\text{Mährotor-Umfangsgeschwindigkeit} = 8 \text{ s}^{-1} \cdot \pi \cdot 1,4\text{m} = 35 \text{ m/s}$$

Diese Umfangsgeschwindigkeit des Mährotors reicht aus, um stengelartige Erntegüter im freien Schnitt abzuschlagen, ist andererseits aber noch nicht so hoch, daß eine Gutstengel-Abstoßung eintreten könnte.

Nimmt man weiterhin — wie oben ebenfalls bereits angegeben bei einer Gesamtarbeitsbreite der Maschine von B = 2,40 m die Einzel-Arbeitsbreiten bzw. Abstände der Teilerspitzen voneinander mit b = 0,24 m an, und geht man weiter davon aus, daß sich eine (infolge der konischen Gestaltung der Teilerspitzen) bei etwa b/2 = 0,12 m liegende Einzugs- und Schnittstelle 56 für die Gutstengel an der Rückseite der Teilerspitzen ergeben soll, so bestimmt sich die Zeit, die vergeht, um den gemäß Fig. 7a am ungünstigsten einlaufenden Gutstengel in die Einzugs- und Schneidstellung 56 durch den langen Greifzahn 60 des Rotationskörpers 12 zu befördern, aus der Beziehung

$$\text{Einzugszeit} = \frac{\text{Einzugsweg}}{\text{Rotationskörper-Umfangsgeschwindigkeit}}$$

$$= \frac{0,12\ m}{2m/s} = 0,06\ s$$

Bei einer Fahrgeschwindigkeit der Maschine von 7,2 km/h = 2 m/s, was der Umfangsgeschwindigkeit der Rotationskörper entspricht, fährt die Maschine in den 0,06 s auch 0,12 m näher an den abzuschneidenden Gutstengel, so daß genau die Schnittposition gemäß Fig. 7b und c erreicht wird.

Daraus ergibt sich für den Mährotor, daß jeweils in diesem Zeitraum, also jeweils nach 0,06 s, ein Schnitt erfolgen muß, um. jeden in die Position nach Fig. 7b gebrachten Stengel dort auch entsprechend Fig. 7c abzuschneiden. Bei der oben angenommenen Mährotor-Drehzahl von 8 U/s und der Einzugszeit von 0,06 s ergibt sich damit für den Mährotor die Anzahl der erforderlichen Mähmesser aus der Beziehung

$$\text{Mähmesserzahl} = \frac{1}{0,06\ s \cdot 8\ U/s} \approx 2,$$

d. h. es sind mindestens 2 Mähmesser erforderlich.

Für den Einsatz der Maschine in anderem, im Vergleich zum Mais sehr dicht stehendem Erntegut, wie z. B. Raps, ist es empfehlenswert, bei Zugrundelegung der gleichen Werte des vorstehenden Zahlenbeispiels die Anzahl der Messer am Mährotor auf 3 zu erhöhen, um eine noch höhere Schnittfrequenz zu erreichen und damit sicherzustellen, daß jeder sich in der Einzugs- und Schnittposition gemäß Fig. 7b u. c befindende Stengel dort auch abgeschnitten wird.

Auch die Ausführungsform nach Fig. 4 bis 7 ist nicht auf das dargestellte und vorstehend im einzelnen erläuterte Beispiel beschränkt ; das gilt insbesondere für die verschiedenen Zahlenangaben, die in jedem Fall nur beispielhaft zu verstehen sind. Wenngleich die Ausbildung der Maschine gemäß . Anspruch 7 die besonders bevorzugte Ausführungsform nach Fig. 4 bis 7 ermöglicht und darüber hinaus auch eine Ausführung mit lediglich einer einzigen, einseitig zu den Einschubwalzen versetzten Mäh- und Einzugseinrichtung, also gleichsam eine mittig geteilte Maschine nach Fig. 4, erlaubt, so läßt diese Ausbildung sich mit Vorteil auch anwenden bei mit mehreren, z. B. entsprechend dem Ausführungsbeispiel nach Fig. 1 bis 3 mit vier rotierenden einzelnen Einzugsund Mäheinrichtungen ausgestatteten Maschinen. Es bedarf dazu lediglich einer weiteren Antriebsübertragung von den beiden den Einschubwalzen des Häckselgebläses nächstgelegenen Einzugs- und Mäheinrichtungen zu weiteren Einzugsund Mäheinrichtungen, was über bodenseitige Antriebskopplungen geschehen kann, wie überhaupt statt des in Fig. 4 bis 7 dargestellten und beschriebenen Obenantriebs für die Rotationskörper und Mährotoren ohne weiteres auch ein entsprechender Untenantrieb oder ein Antrieb des Rotationskörpers von oben und des Mährotors von unten (so z. B. bei nicht koaxialer Anordnung beider Teile) vorgesehen sein könnte.

## Patentansprüche

1. Maschine zum Mähen und Häckseln von Mais oder ähnlichem stengelartigen Erntegut, welche die Stengel (25) des Ernteguts in aufrechter Stellung einzieht und mäht und anschließend einem Häckselgebläse (1) zuführt, dem zur Beschickung mit den abgeschnittenenen Stengeln des Ernteguts Einschubwalzen (3) zugeordnet sind, wobei die Stengel des Ernteguts nach dem Mähen weiterbefördert und im Zusammenwirken mit Führungsteilen (13, 13', ...) in eine Schräglage in Fahrtrichtung (F) nach vorne gebracht werden, in der sie mit ihren abgeschnittenen Enden mit den dem Häckselgebläse vorgesetzten Einschubwalzen in Eingriff gelangen, wobei innerhalb der von zwei seitlichen Führungen (20) begrenzten Gesamtarbeitsbreite (B) der Maschine mehrere dem Häckselgebläse mit den Einschubwalzen in Fahrtrichtung der Maschine vorgeordnete und um im wesentlichen vertikale Achsen (10) rotierende, mit abstehenden Mitnehmerzähnen (11, 21) versehene Einzugs- und Mäheinrichtungen (6, 7, 8, 9) angeordnet sind, dadurch gekennzeichnet, daß an jeder der Einzugs- und Mäheinrichtungen (6, 7, 8, 9) jeweils eine Mehrzahl von über den vorderen Arbeitsbereich verteilten Einzugsund Schnittstellen (16, 15) ausgebildet ist und somit jede Einzugs- und Mäheinrichtung (6, 7, 8, 9) in eine Vielzahl von nebeneinander liegenden Einzel-Arbeitsbreiten gleichmäßig unterteilt ist, wobei die Abstände zwischen den einzelnen Einzugs- und Schnittstellen (16, 15) jeweils durch Führungsteile (13) überbrückt und somit die Einzugs- und Mäheinrichtungen bereichsweise jeweils zugleich auch Überführungsorgan für von weiter entfernten Schnittstellen kommendes Erntegut sind.

7

2. Maschine nach Anspruch 1, dadurch gekennzeichnet, daß die jeweilige Schneidvorrichtung (24, 29) von unabhängig zum zugehörigen Rotationskörper (12) umlaufenden, jedoch mit wesentlich höherer Umfangsgeschwindigkeit als dieser angetriebenen, die Gutstengel im freien Schnitt abtrennenden Mähmessern (24) gebildet ist.

3. Maschine nach Anspruch 1 oder 2, dadurch gekennzeichnet, daß die Umfangsgeschwindigkeit der Rotationskörper (12) in angenäherter Übereinstimmung mit der Fahrgeschwindigkeit der Maschine steht und mindestens gleich der Umfangsgeschwindigkeit der Einschubwalzen (3) des Häckselgebläses (1) ist und daß Anzahl und Umfangsgeschwindigkeit der im Arbeitsbereich mit mindestens Gutstengeldurchmesser über den Grundkreis von unteren Greifzähnen (60) der Rotationskörper vorstehenden Mähmesser (24) in Abhängigkeit von der Umfangsgeschwindigkeit der Rotationskörper (12) so bemessen sind, daß sich innerhalb jeder Einzel-Arbeitsbreite (b) für die eingezogenen Gutstengel jeweils eine gleiche Schnittstelle (56) ergibt.

4. Maschine nach einem der Ansprüche 1 bis 3, dadurch gekennzeichnet, daß die Schnittstellen (56) jeweils an der als Stütz- und Führungsfläche (57) ausgebildeten Rückseite von Teilerspitzen (52, 54) definiert sind, die von den radial vorstehenden Greifzähnen (60) des Rotationskörpers (12) unterlaufen werden und die mit zumindest einem enggezahnten Mitnehmer-Kranz (z. B. 58) des Rotationskörpers einen sich in Drehrichtung verengenden Einzugspalt bilden.

5. Maschine nach einem der Ansprüche 1 bis 4, dadurch gekennzeichnet, daß die Teilerspitzen (52) mit in Drehrichtung der Rotationskörper (12) und der Mähmesser (24) verlaufenden und sich bis in den Bereich der Schnittstelle (56) einer benachbarten Teilerspitze (52, 54) erstreckenden Führungsfingern (61) versehen sind, die in Verbindung mit dem enggezahnten Mitnehmerkranz (58) eine die geschnittenen Gutstengel aufnehmende Haltekammer ausbilden.

6. Maschine nach einem der Ansprüche 1 bis 5, dadurch gekennzeichnet, daß sich die Schnittstellen (56) für die Gutstengel jeweils — in Drehrichtung gesehen — in einem Bereich vor die Teilerspitzen (52) unterseitig halternden Tragteilen (53) befinden.

7. Maschine nach einem oder mehreren der Ansprüche 1 bis 6, dadurch gekennzeichnet, daß sie lediglich zwei den Einschubwalzen (3) des Häckselgebläses vorgeordneten Einzugs- und Mäheinrichtungen (7, 9) aufweist, wobei die beiden Rotationskörper (12) mit den Schneidvorrichtungen (24, 29) einen solchen Durchmesser haben, daß sich eine Gesamtarbeitsbreite (B) der Maschine von etwa 2 bis 3 Meter ergibt.

8. Maschine nach Anspruch 7, dadurch gekennzeichnet, daß am vorderen Arbeitsbereich jedes der beiden Rotationskörper (12) mindestens fünf Einzugsbereiche und Schnittstellen (56) ausgebildet sind.

9. Maschine nach einem oder mehreren der Ansprüche 1 bis 6 in Verbindung mit den Ansprüchen 7 und 8, dadurch gekennzeichnet, daß sie lediglich eine die Gesamtarbeitsbreite (B) bestimmende Einzugs- und Mäheinrichtung (7 oder 9) aufweist, die einseitig versetzt zu den Einschubwalzen (3) des Häckselgebläses (1) angeordnet ist.

10. Maschine nach einem oder mehreren der Ansprüche 1 bis 9, dadurch gekennzeichnet, daß bei einer etwa der Fahrgeschwindigkeit der Maschine entsprechenden Umfangsgeschwindigkeit der Einschubwalzen (3) des Häckselgebläses (1) und bei gleicher oder annähernd gleicher Umfangsgeschwindigkeit der Mitnehmer bzw. Mitnehmerkränze (58, 59) jedes Rotationskörpers (12) die zugehörige Schneidvorrichtung (24, 29) jeweils mindestens zwei mit 10- bis 20-facher Umfangsgeschwindigkeit umlaufende Mähmesser aufweist.

11. Maschine nach einem oder mehreren der Ansprüche 1 bis 10, dadurch gekennzeichnet, daß die Schneidvorrichtung (24, 29) und der Rotationskörper (12) jeweils gemeinsam von oben her angetrieben und bodenseitig an einem Gleitstück (27) abgestützt und gelagert sind.

12. Maschine nach Anspruch 11, dadurch gekennzeichnet, daß eine sich durch den Rotationskörper (12) erstreckende Antriebswelle (26) für die Schneidvorrichtung (24, 29) vorgesehen ist und daß der Rotationskörper (12) auf dieser Antriebswelle mit einer Hohlwelle (30) gelagert ist, wobei beide Wellen (26, 30) an ihrem oberen Ende über einen Getriebeblock (36) so miteinander gekoppelt sind, daß die von einer Antriebseingangswelle (35) gelieferte Drehzahl in zwei unterschiedliche Drehzahlen zerlegt wird.

13. Maschine nach Anspruch 7 und den Ansprüchen 11 und 12, dadurch gekennzeichnet, daß die Antriebseingangswellen (35) für die beiden Rotationskörper (12) mit den Schneidvorrichtungen (24, 29) oberhalb der Rotationskörper quer zur Fahrtrichtung horizontal liegend angeordnet und über ein Winkelgetriebe (44) miteinander antriebsmäßig gekoppelt sind, das seinerseits antriebsmäßig über eine Gelenkwelle (45) od. dgl. mit dem Antrieb des Häckselgebläses (1) in Wirkverbindung steht.

14. Maschine nach Anspruch 13, dadurch gekennzeichnet, daß die Antriebseingangswellen (35) mit dem gemeinsamen Winkelgetriebe (44) derart oberhalb und vor dem Einzugsbereich der Einschubwalzen (3) des Häckselgebläses (1) angeordnet und ummantelt sind, daß sie ein die Schräglage der Gutstengel für das Einbringen in die Einschubwalzen (3) begünstigendes Führungsteil ausbilden.

## Claims

1. A machine for reaping and chopping maize or similar stalk-like crops, which draws in and cuts the stalks (25) of the crop in the upright position and then supplies them to a chaff blower (1) with which there are associated feed rollers (3) to charge it with the cut-off stalks of the crop, wherein the stalks of the crop are conveyed further, after being reaped, and, in cooperation with guide members (13, 13'. ..) are brought forwards in the direction of travel (F), in an inclined position in which they come into engagement, by their cut-off ends, with the feed rollers preceding the chaff blower, and wherein a plurality of draw-in and cutting devices (6, 7, 8, 9), which are arranged in front of the chaff blower with the feed rollers in the direction of travel of the machine and rotate about substantially vertical axes (10) and which are provided with projecting entrainment teeth (11, 21), are disposed within the total working width (B) of the machine bounded by two lateral guides (20), characterised in that a plurality of draw-in and cutting positions (16, 15), distributed over the front working region, is formed on each of the draw-in and cutting devices (6 7, 8, 9) and so each draw-in and cutting device (6, 7, 8, 9) is divided uniformly into a plurality of individual working widths lying side by side, the spaces between the individual draw-in and cutting positions (16, 15) being bridged by guide members (13) in each case and so, in places, the draw-in and cutting devices are each also transfer members for crops coming from more remote cutting positions at the same time.

2. A machine according to Claim 1, characterised in that the respective cutting device (24, 29) is formed by reaping knives (24) which rotate independently of the associated rotary member (12) but are driven at a considerably higher peripheral speed than this and which sever the crop stalks in a free cut.

3. A machine according to Claim 1 or 2, characterised in that the peripheral speed of the rotary member (12) coincides approximately with the speed of travel of the machine and is at least equal to the peripheral speed of the feed rollers (3) of the chaff blower (1) and in that the number and peripheral speed of the reaping knives (24), projecting in the working region by at least the diameter of the crop stalks beyond the base circle of lower gripping prongs (60) of the rotary member are such, depending on the peripheral speed of the rotary member (12), that there is an equal cutting position (56) for each crop stalk drawn in, within each individual working width (b).

4. A machine according to any one of the Claims 1 to 3, characterised in that the cutting positions (56) are each defined at the back, constructed in the form of a supporting and guide surface (57), of pointed dividers (52, 54) under which the radially projecting gripping prongs (60) of the rotary member (12) run and which, together with at least one narrowly toothed entrainment rim (for example 58) of the rotary member, form a draw-in gap which becomes narrower in the direction of rotation.

5. A machine according to any one of the Claims 1 to 4, characterised in that the pointed dividers (52) are provided with guide fingers (61) which extend in the direction of rotation of the rotary member (12) and of the reaping knives (24) and reach as far as the region of the cutting position (56) of an adjacent pointed divider (52, 54) and which, in combination with the narrowly toothed entrainment rim (58) form a holding compartment receiving the cut crop stalks.

6. A machine according to any one of the Claims 1 to 5, characterised in that the cutting positions (56) for the crop stalks are each — seen in the direction of rotation — in a region in front of supporting members (53) supporting the pointed dividers (52) at the under side.

7. A machine according to any one or more of the Claims 1 to 6, characterised in that it comprises only two draw-in and cutting devices (7, 9) arranged in front of the feed rollers (3) of the chaff blower, and the two rotary members (12) with the cutting devices (24, 29) have such a diameter that a total working width (B) of the machine of about 2 to 3 metres results.

8. A machine according to Claim 7, characterised in that at least five draw-in regions and cutting positions are formed in the front working region of each of the two rotary members (12).

9. A machine according to any one or more of the Claims 1 to 6 in combination with Claims 7 and 8, characterised in that it comprises only one draw-in and cutting device (7 or 9) determining the total working width (B), which device is arranged offset at one side in relation to the feed rollers (3) of the chaff blower (1).

10. A machine according to any one or more of the Claims 1 to 9, characterised in that with a peripheral speed of the feed rollers (3) of the chaff blower (1) corresponding substantially to the travelling speed of the machine and with the same or substantially the same peripheral speed of the entrainment means or entrainment rim (58, 59) of each rotary member (12), the associated cutting device (24, 29) has at least two reaping knives rotating at 10 to 20 times the peripheral speed in each case.

11. A machine according to any one or more of the Claims 1 to 10, characterised in that the cutting device (24, 29) and the rotary member (12) are driven jointly from above and are supported and mounted at the bottom on a sliding member (27).

12. A machine according to Claim 11, characterised in that a driving shaft (26) extending through the rotary member (12) is provided for the cutting device (24, 29) and in that the rotary member (12) is mounted with a hollow shaft (30) on this driving shaft, the two shafts (26, 30) being so coupled to one another through a gear block (36) that a speed of rotation delivered by a drive input shaft (35) is split into two different speeds of rotation.

13. A machine according to Claim 7 and Claims 11 and 12, characterised in that the drive input shafts (35) for the two rotary members (12) with the cutting devices (24, 29) are disposed lying horizontally, transversely to the direction of travel, above the rotary members and are coupled to one another, with regard to the drive, through a mitre gear (44) which in turn is operationally connected, with regard to drive, to the drive of the chaff blower (1) through a cardan shaft (45) or the like.

14. A machine according to Claim 13, characterised in that the drive input shafts (35) with the common mitre gear (44) are arranged above and in front of the draw-in region of the feed rollers (3) of the chaff blower (1) and encased, in such a manner that they form a guide member encouraging the inclined position of the crop stalks for introduction into the feed rollers (3).

**Revendications**

1. Machine pour faucher et hacher du maïs ou des récoltes à longues tiges similaires, qui introduit et fauche les tiges (25) du produit récolté en position verticale, puis les amène à un appareil de hachage et de ventilation (1) auquel sont associés des rouleaux d'alimentation (3) destinés à l'alimenter au moyen des tiges coupées du produit récolté, les tiges du produit récolté faisant donc l'objet d'un transport après le fauchage et étant amenées par coopération avec des éléments de guidage (13, 13', . ..) dans une position oblique vers l'avant dans le sens de la marche (F), dans laquelle leurs extrémités coupées sont attaquées par les rouleaux d'alimentation montés en amont de l'appareil de hachage et de ventilation, tandis que dans les limites de la largeur totale d'action (B) de la machine qui est définie par deux guides latéraux (20) sont montés plusieurs dispositifs d'introduction et de fauchage (6, 7, 8, 9) tournant autour d'axes en substance verticaux (10) et pourvus de dents d'entraînement saillantes (11, 21), qui précèdent l'appareil de hachage et de ventilation avec les rouleaux d'alimentation, dans le sens de la marche de la machine, caractérisée en ce que chacun des dispositifs d'introduction et de fauchage (6, 7, 8, 9) présente plusieurs endroits d'introduction et de coupe (16, 15) qui sont répartis sur la zone de travail antérieure, de sorte que chaque dispositif d'introduction et de fauchage (6, 7, 8, 9) est subdivisé uniformément en plusieurs largeurs de travail individuelles situées côte à côte, les distances entre les endroits d'introduction et de coupe individuels (16, 15) étant chaque fois pontées par des éléments de guidage (13), et les dispositifs d'introduction et de fauchage servant ainsi chacun, par zones, en même temps d'organes de transfert pour le produit récolté arrivant d'endroits de coupe plus éloignés.

2. Machine suivant la revendication 1, caractérisée en ce que chaque dispositif de coupe (24, 29) est formé par des couteaux de fauchage (24) qui tournent indépendamment du corps rotatif (12) associé, mais sont entraînés à une vitesse périphérique nettement supérieure à celle de ce dernier et sectionnent les tiges du produit par coupe libre.

3. Machine suivant la revendication 1 ou 2, caractérisée en ce que la vitesse périphérique des corps rotatifs (12) correspond à peu près à la vitesse de marche de la machine et est au moins égale à la vitesse périphérique des rouleaux d'alimentation (3) de l'appareil de hachage et de ventilation (1), et le nombre ainsi que la vitesse périphérique des couteaux de fauchage (24) qui, dans la zone de travail, dépassent, au moins du diamètre des tiges du produit récolté, du cercle de base des dents d'agrippage inférieures (60) du corps rotatif, sont choisis en fonction de la vitesse périphérique du corps rotatif (12) d'une manière telle que, dans les limites de chaque largeur de travail individuelle (B), un même endroit de coupe (56) soit chaque fois obtenu pour les tiges de produit récolté introduites.

4. Machine suivant l'une quelconque des revendications 1 à 3, caractérisée en ce que les endroits de coupe (56) sont définis chaque fois au niveau de la face postérieure, ayant la forme d'une surface de support et de guidage (57), de pointes de séparation (52, 54) en dessous desquelles passent les dents d'agrippage (60) radialement en saillie sur le corps rotatif (12) et qui forment, avec au moins une couronne d'entraînement à denture fine (par exemple 58) du corps rotatif, une fente d'introduction qui devient plus étroite dans le sens de la rotation.

5. Machine suivant l'une quelconque des revendications 1 à 4, caractérisée en ce que les pointes de séparation (52) sont pourvues de doigts de guidage (61) qui sont orientés dans le sens de la rotation du corps rotatif (12) et des couteaux de fauchage (24) et s'étendent jusque dans la zone de l'endroit de coupe (56) d'une pointe de séparation voisine (52, 54), les doigts (61) formant, avec la couronne d'entraînement à denture fine (53), une chambre de retenue recevant les tiges coupées du produit.

6. Machine suivant l'une quelconque des revendications 1 à 5, caractérisée en ce que les endroits de coupe (56) pour les tiges du produit sont chacun situés (dans le sens de la rotation) dans une zone précédant des éléments de support (53) supportant les pointes de séparation (52) à leur face inférieure.

7. Machine suivant l'une quelconque des revendications 1 à 6, caractérisée en ce qu'elle ne présente que deux dispositifs d'introduction et de fauchage (7, 9) montés en amont des rouleaux d'alimentation (3) de l'appareil de hachage et de ventilation, les deux corps rotatifs (12), avec les dispositifs coupe (24, 29), ayant un diamètre tel que la largeur de travail totale (B) de la machine est d'environ 2 à 3 mètres.

8. Machine suivant la revendication 7, caractérisée en ce qu'au moins cinq zones d'introduction et de coupe (56) sont formées au niveau de la zone de travail antérieure de chacun des deux corps rotatifs (12).

9. Machine suivant l'une quelconque des revendications 1 à 6, en relation avec les revendications 7 et 8, caractérisée en ce qu'elle ne comporte qu'un dispositif d'introduction et de fauchage (7 ou 9) déterminant la largeur de travail totale (3), qui est décalé d'un côté par rapport aux rouleaux d'alimentation (3) de l'appareil de hachage et de ventilation (1).

10. Machine suivant l'une quelconque des revendications 1 à 9, caractérisée en ce que pour une vitesse périphérique des rouleaux d'alimentation (3) de l'appareil de hachage et de ventilation (1) correspondant à peu près à la vitesse de marche de la machine et pour une vitesse périphérique égale ou à peu près égale des organes d'entraînement ou de la couronne d'entraînement (58, 59) de chaque corps rotatif (12), le dispositif de coupe (24, 29) associé présente chaque fois au moins deux couteaux de fauchage tournant à une vitesse périphérique qui vaut 10 à 20 fois la première.

11. Machine suivant l'une quelconque des revendications 1 à 10, caractérisée en ce que le dispositif de coupe (24, 29) et le corps rotatif (12) sont chaque fois entraînés en commun par le haut et supportés à rotation par le bas par une pièce de glissement (27).

12. Machine suivant la revendication 11, caractérisée en ce qu'elle comprend un arbre d'entraînement (26) pour le dispositif de coupe (24, 29) qui s'étend à travers le corps rotatif (12) et le corps rotatif (12) est monté à rotation par un arbre creux (30) sur cet arbre d'entraînement, les deux arbres (26, 30) étant accouplés à leur extrémité supérieure par une boîte d'engrenages d'une manière telle que le nombre de tours fournis par un arbre d'entraînement d'entrée (35) soit divisé en deux nombres de tours différents.

13. Machine suivant la revendication 7 et les revendications 11 et 12, caractérisée en ce que les arbres d'entraînement d'entrée (35) Pour les deux corps rotatifs (12) avec les dispositifs de coupe (24, 29) sont disposés horizontalement dans le sens transversal à celui de la marche, au-dessus des corps rotatifs et sont accouplés pour l'entraînement, par l'intermédiaire d'une boite de renvoi (44) qui est à son tour en liaison active pour l'entraînement par l'intermédiaire d'un arbre articulé (45) ou d'un élément analogue à l'entraînement de l'appareil de hachage et de ventilation (1).

14. Machine suivant la revendication 13, caractérisée en ce que les arbres d'entraînement d'entrée (35) avec la boîte de renvoi (44) commune sont gainés et disposés au-dessus de la zone d'introduction des rouleaux d'alimentation (3) de l'appareil de hachage et de ventilation (1) et devant celui-ci d'une manière telle qu'ils forment un élément de guidage favorisant l'obliquité des tiges du produit en vue de leur introduction dans les rouleaux d'alimentation (3).

Fig.1

0 099 527

# Fig. 2

Fig. 3

Fig. 4

# Fig. 5

A

27

27'

12

58,59

53

53

29

53'

53

24

56

61

57

56

61

57

56

60

61

57

60

61

57

56

60

56

54

52

52

52

52

52

51

0 099 527

Fig.6

0 099 527

Fig.7a

Fig.7b

0 099 527

Fig.7c

Fig. 7d